# EUROPÄISCHE PATENTANMELDUNG

(11) **EP 2 754 525 A1**
(43) Veröffentlichungstag der Anmeldung: **16.07.2014**
(21) Anmeldenummer: 13150986.1
(22) Anmeldetag: 11.01.2013
(51) Int. Cl.: B23K 26/03, B23K 26/14

(54) **Online-Überwachung des Schutzgaszuflusses**

(71) Anmelder: Siemens Aktiengesellschaft, 80333 München (DE)
(72) Erfinder: Burbaum, Bernd, 14612 Falkensee (DE)

(57) **Zusammenfassung**

Durch die Online-Überwachung von der möglichen Bildung einer Oxidschicht auf dem Schweißgut kann die Flussrate des Schutzgases (18) erhöht werden, um die weitere Bildung von Oxidfilmen auf dem Schweißfleck bei der Fortführung des Schweißverfahrens zu verhindern.

## Beschreibung

Die Erfindung betrifft die kontinuierliche Überwachung der Schutzgasflussrate beim Schweißen.

Bei servicebeanspruchten Komponenten hergestellt aus einkristallinen Nickelbasis-Superlegierungen ist ein einkristallin erstarrter Reparaturaufbau mittels Laserstrahl-Auftragsschweißen angestrebt, um die mechanischen Eigenschaften der zu reparierenden Komponenten im Bereich des Grundwerkstoffs zu erhalten. Für die einkristalline Erstarrung müssen die Verfahrensparameter in sehr engen Toleranzen gehalten werden. Eine Oxidation an der Oberfläche des Schmelzbades kann zu einer Keimbildung von fehlorientierten Körnern und damit zur Schwächung der einkristallinen Struktur führen.
Auch beim polykristallinen Schweißen ist eine Oxidbildung unerwünscht.
Beim Laserstrahl-Auftragsschweißen werden Düsen eingesetzt, durch die das Schmelzbad mittels eines Schutzgasstroms vor Oxidation geschützt wird.

Jedoch kann beim Laserstrahl-Auftragsschweißen an unterschiedlichen Geometrien von Gasturbinenkomponenten die Schutzgasabschirmung des Schmelzbades beeinflusst werden, so dass Umgebungsluft an die Schmelzbadoberfläche gelangt und dort zu Oxidation führt.

Es ist daher Aufgabe der Erfindung oben genanntes Problem zu lösen.

Die Aufgabe wird gelöst durch eine Vorrichtung gemäß Anspruch 1 und ein Verfahren gemäß Anspruch 7.

Vorgeschlagen wird der Aufbau eines Regelkreises zur Schutzgasabschirmung des Schmelzbades.

In den Unteransprüchen sind weitere vorteilhafte Maßnahmen angegeben, die beliebig miteinander kombiniert werden können, um weitere Vorteile zu erzielen.

Vorgeschlagen wird der Aufbau eines Regelkreises beim Auftragsschweißen an Gasturbinenkomponenten.
Mit einer Kombination aus Wärmebildkamera (infraroter Wellenlängenbereich) und Lichtbildkamera (sichtbarer Wellenlängenbereich) wird das Schmelzbad online während des Schweißprozesses vorzugsweise koaxial durch die Optik und die vorzugsweise koaxiale Düse gemessen. Gelangt Umgebungsluft (speziell Sauerstoff) an die Schmelzbadoberfläche führt dies zu Oxidation und damit zur Änderung der Abstrahlcharakteristik (Emissionsgrad bzw. Emissivität ε). Die Änderung des Emissionsgrads wird von der Wärmebildkamera gemessen. Eine Umwandlung des Signals der Wärmebildkamera wird als Stellgröße für den Zufluss an Schutzgas eingesetzt, so dass auf eine Oxidation an der Schmelzbadoberfläche Einfluss genommen werden kann. Mit Hilfe der Lichtbildkamera werden die für die Oxidation relevanten Bereiche definiert und mit dem Thermokamerabild abgeglichen.

Es zeigen:
- Figur 1 - 3: eine erfindungsgemäße Vorrichtung,
- Figur 4, 5: Aufnahmen eines Strahlflecks.

Die Figuren und die Beschreibung stellen nur Ausführungsbeispiel der Erfindung dar.

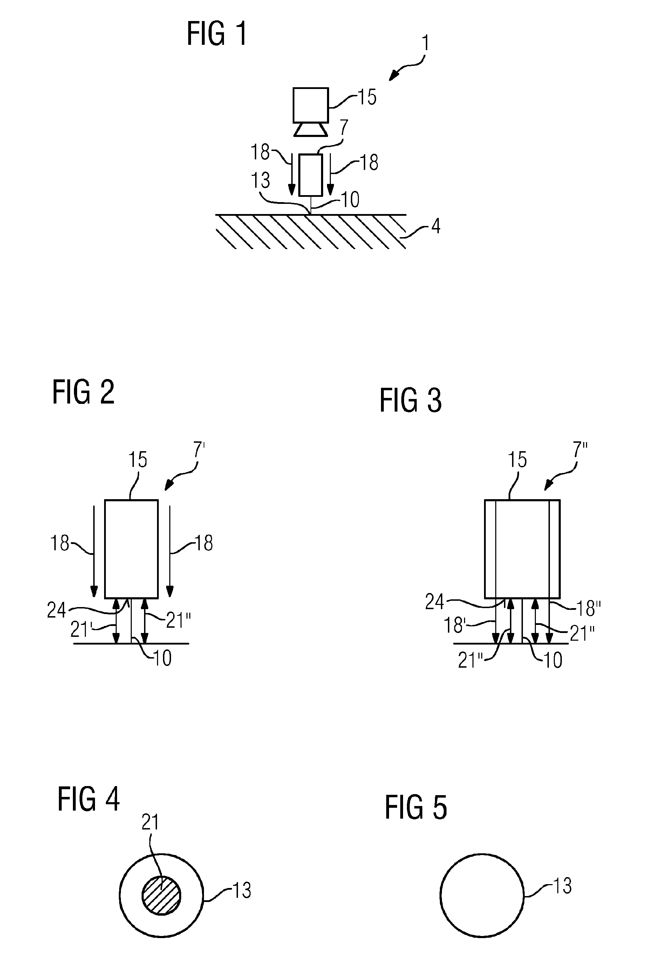

In Figur 1 ist eine erfindungsgemäße Vorrichtung 1 gezeigt. Die Vorrichtung 1 weist eine nicht näher dargestellte Halterung oder Auflage für ein zu bearbeitendes Bauteil 4 auf.
Das Bauteil 4 oder das Substrat 4 werden mit einem Schweißgerät 7 bearbeitet, das einen Schweißstrahl oder energiereichen Strahl 10 aussendet.

Im Falle von Laserstrahlen ist dies ein Laserstrahl oder bei anderen konventionellen Schweißgeräten ein Plasmastrahl.

Auf dem Bauteil 4 wird eine Stelle bearbeitet, die den Brennfleck 13 darstellt. Dieser Brennfleck 13 kann durch einen Sensor 15 überwacht werden.

Der Sensor 15 stellt eine Optik dar und weist vorzugsweise eine Wärmebildkamera und insbesondere auch noch eine Lichtbildkamera auf.

Mit Hilfe der Lichtbildkamera werden die für die Oxidation relevanten Bereiche um oder in dem Brennfleck 13 definiert und mit dem Thermokamerabild abgeglichen.
Somit muss nicht mehr das Thermokamerabild analysiert, welche Bereiche den Brennfleck 13 darstellen und welche nicht.

Das Schweißverfahren wird solange unverändert durchgeführt, solange der Brennfleck eine vorgegebene Abstrahlungscharakteristik aufweist.

Werden Abweichungen 21 gemäß Figur 4 im Vergleich zu Figur 5 mit einem wunschgemäßen Strahlenfleck 13 in der Intensität oder Intensitätsverteilung festgestellt, weil sich ein Oxidschichtfilm 21 gebildet hat, der zu einer geringen Emission führt, tritt der Regelprozess in Kraft. Dann wird die Flussrate an Schutzgas 18', 18" erhöht, um die Oxidbildung zu vermeiden.
Vorzugsweise kann auch die Leistung oder Energie erhöht werden.

Vorzugsweise kann der Gasfluss wieder reduziert werden, wenn die gewünschte Strahlungscharakteristik des Brennflecks 13 wieder hergestellt ist.

Der Brennfleck 13 wird vorzugsweise koaxial durch den Sensor 15 bzw. Optik 15 und durch eine vorzugsweise koaxiale Düse 7 gemessen.

Das Substrat 4 ist vorzugsweise eine kobalt- oder nickelbasierte Suberlegierung und vorzugsweise gerichtet erstarrt, d. h. es ist einkristallin oder weist kolumnare Körner auf.

Das Verfahren kann vorzugsweise bei jedem Schweißverfahren angewendet werden, beim Umschmelzen, Auftragsschweißen, ganz insbesondere beim Laserschweißverfahren.

In Figur 2 ist dargestellt, dass optische Strahlen 21', 21" des Sensors 15 zur Charakterisierung des Brennflecks 13 am Ende 24 der Düse 7' heraustreten. Die Optik eines Sensors 15 ist also in der Düse 7' integriert.
Das Schutzgas 18', 18" strömt vorzugsweise außen an der Düse 7' vorbei.
Dies vereinfacht die Handhabung bei Bewegung der Düse 7', 7'.

In Figur 3 ist dargestellt, dass sowohl die Optik des Sensors 15 wie in Figur 2 als auch die Zufuhr von Schutzgas 18', 18" innerhalb der Düse 7" angeordnet ist.
Dies vereinfacht die Handhabung bei Bewegung der Düse 7', 7' und die Koaxialität.

## Patentansprüche

1. Vorrichtung (1)
zur Online-Überwachung eines Schweißverfahrens, insbesondere eines Laserschweißverfahrens,
die (1) zumindest aufweist:
eine Halterung oder Auflage für ein zu schweißendes Bauteil (4),
eine Düse (7, 7', 7'') eines Schweißgeräts,
insbesondere eines Lasers,
ganz insbesondere eine koaxiale Düse (7, 7', 7''),
die (7, 7', 7'') energiereiche Strahlen (10) aussenden kann,
wobei ein Schutzgas (18) ein Brennfleck (13) auf dem Bauteil (4) umhüllen kann und
einen Sensor (15),
der eine Strahlungscharakteristik des Brennflecks (13) erfassen kann,
und eine Regelung bei Abweichungen der Strahlungscharakteristik des Brennflecks (13) für eine Flussrate des Schutzgases (18).

2. Vorrichtung nach Anspruch 1,
die eine Wärmebildkamera und eine Lichtbildkamera als Sensor (15) aufweist.

3. Vorrichtung nach einem oder beiden der Ansprüche 1 oder 2,
bei der der Sensor (15) koaxial zur Düse (7, 7', 7'') angeordnet ist.

4. Vorrichtung nach einem oder mehreren der Ansprüche 1 bis 3,
bei der eine Optik des Sensors (15) in der Düse (7', 7'') integriert ist.

5. Vorrichtung nach einem oder mehreren der Ansprüche 1 bis 4,
bei der die Zufuhr von Schutzgas (18', 18'') und eine Optik des Sensors (15) in der Düse (7'') integriert ist.

6. Vorrichtung nach einem oder mehreren der Ansprüche 1 bis 5,
bei der der Sensor (15) Strahlen (21', 21'') koaxial zum Strahl (10) aussenden.

7. Verfahren
zur Online-Überwachung eines Schweißverfahrens, insbesondere bei dem eine Vorrichtung (1) nach einem oder mehreren der Ansprüche 1 bis 6 benutzt wird und insbesondere zur Online-Überwachung eines Laserschweißverfahren,
bei dem eine Strahlungscharakteristik eines Brennflecks (13) überwacht wird und
die Flussrate eines Schutzgases (18) verändert wird,
wenn sich die Strahlungscharakteristik des Brennflecks (13) verändert.

8. Verfahren nach Anspruch 7,
bei dem die Flussrate des Schutzgases (18) erhöht wird, wenn sich ein Oxidfilm auf dem Brennfleck (13) bildet.

9. Verfahren nach einem oder beiden der Ansprüche 7 oder 8,
das eine Wärmebildkamera und eine Lichtbildkamera als Sensor (15) verwendet.

10. Verfahren nach einem oder mehreren der Ansprüche 7, 8 oder 9,
das ein Laserauftragsschweißen darstellt.

11. Verfahren nach einem oder beiden der Ansprüche 9 oder 10,
bei dem die Lichtbildkamera den zu scannenden Bereich des Brennflecks (13) oder den zu scannenden Bereich um den Brennfleck (13) für die Wärmebildkamera bestimmt.

12. Verfahren nach einem oder mehreren der Ansprüchen 9, 10 oder 11,
bei dem die Bilder der Lichtbildkamera mit den Bildern der Thermobildkamera abgeglichen werden.

13. Verfahren nach einem oder mehreren der Ansprüche 7 bis 12,
bei dem der Brennfleck (13) koaxial durch den Sensor (15) und insbesondere koaxial durch die Düse (7, 7', 7'') gemessen wird.
